# EUROPEAN PATENT APPLICATION

(11) **EP 2 671 533 A1**
(43) Date of publication of application: **11.12.2013**
(21) Application number: 12742692.2
(22) Date of filing: 30.01.2012
(51) Int. Cl.: A61C 3/02, A61C 8/00

(54) **DEVICE FOR DENTAL IMPLANT PROCEDURES**

(30) Priority: 31.01.2011 ES 201130114 P
(71) Applicant: Sala Meseguer, Juan Carlos, 03001 Alicante (ES)
(72) Inventor: Sala Meseguer, Juan Carlos, 03001 Alicante (ES)
(74) Representative: Ungria López, Javier
(86) International application number: PCT/ES2012/070050
(87) International publication number: WO 2012/104459

(57) **Abstract**

The device comprises a scalpel provided with a circular lower end (2) to excise the gingiva (3). The invention is characterised in that the scalpel comprises a tubular body (1), which the aforementioned circular lower end (2) includes a diametral plate (4) to excise the gingiva (3) so that, upon rotation of the scalpel, the gingiva is excised and the excised gingival tissue is conveyed to the upper part of the tubular body. The invention also comprises an axis of revolution (9) for it's attachment to a drill, which can also include a drill bit (10) that can be used to excise the gingiva, extract the excised gingival tissue and drill the bone (7) in a single step.

## Description

### OBJECT OF THE INVENTION

As expressed in the title of this descriptive report, the present invention consists of a device for the performance of dental implants whose purpose is to allow the excision of the gingiva into the precise area where the implant has to be inserted and to make much easier the realization of dental implants, the excised gingival tissues are withdrawn by the device of the invention.

### BACKGROUND OF THE INVENTION

Nowadays, a high proportion of the implants are implemented by guided surgery technique which involves a 3D scan of the superior maxilla and the jaw of the patient to make the implant planning through a software that determines the placement of the dental implants with millimetre precision on the corresponding zone.

Based on the information gathered by the scaner and the planification done, a guide surgical splint is made in order to perform the guided surgery of the dental implants, so that the splint is provided with guide holes to perform the drills in the bone area where the implant has to be inserted. This structure allows to perform the guided drill in the bone through the holes performed in the splint when it's placed over the jaw or the superior maxilla of the patient, previously having removed the gingiva that covers the bone to be drilled, in order that the bone is exposed after the drilling where the implants are inserted and screwed in the bone through the splint's guide holes.

In the described process, the removal of the gingiva that covers the bone in the drilling area is known in the prior art that this feature is effected by a scalpel, as described in the invention patent with application number 200450029, in which a circular cutting scalpel is shown for the excision of the gingival tissues in the dental implant process. The scalpel has a hollow conical tapered section at it's lower end, so that it comprises a conical circular end that allows the subsequent removal of the excised gingival tissue when the rotation and axial thrust of the scalpel is permorfed over the gingiva.

The drawback of this scalpel is that it doesn't extract the excised gingiva, being desireable the removal of the gingiva in the same step in which the excision is done.

### DESCRIPTION OF THE INVENTION

To achive the aims and solve the backdraws stated above, the invention provides a new device for the performance of dental implants that contains a scalpel with a circular lower end that excises the gingiva; it's characterized in that the scalpel contains a tubular body which it's cirucular lower end includes a diametral plate that excises the gingiva, so that when the scalpel rotates it causes the gingiva excision, both through it's circular lower end and through the diametral plate. At the same time, the rotation of the plate carries the excised gingival tissues into the top of the tubular body, which allows the simultaneous excision of the gingiva and the removal of the excised tissue, making easier the performance of dental implants. This feature is enhanced by the centrifugal force produced by the diametral plate rotation on the excised gingival tissues, which conveyes them into the top of the tubular body.

In the preferential embodiment of the invention the diametral plate is vertical.

In the preferential embodiment of the invention the tubular body is provided with at least one opening through which access is possible within the tubular body for removal of the excised gingival tissues, which makes easier the cleaning of the scalpel.

The tubular body may have any shape as long as it has a circular lower end to excise the gingiva, having foreseen that in the preferential embodiment of the invention the tubular body is cylindrical.

Both the circular lower end and the diametral excising plate, are provided with a lower edge determined by a blade or a sharp jag that makes easier the excision of the gingiva according to the description given.

On a embodiment of the invention the tubular body is attached to an axis of revolution fixed to a drill, to carry out the excision of the gingiva produced by the rotation of the drill, which facilitates the introduction of the excised gingival tissues towards the top of the tube, caused by the centrifugal force that is produced by the angular displacement of the drill applied to the diametral plate and the force of the plate towards the gingival tissues.

In an embodiment of the invention, the axis of revolution is disposed in correspondence with the axis of the tubular body, so that the upper end of the axis of revolution is attached to the drill by conventional methods, while the lower end of the axis of revolution is provided with a bone drill that protrudes from the tubular body's lower end a distance equal to the bone drill's depth, so that the circular excising lower end delimits the bone drilling obtaining a high-accuracy bone depth, corresponding to the depth of the insertion of the implant in the bone, which considerably facilitates the performance of dental implants with high accuracy. The described configuration causes that metal excising plate is provided with two aligned radial excising ends which are joined by a central excising cylindrical section, well fixed either to the drill or to the axis of revolution. The central excising cylindrical section is fixed to the axis of revolution, in the case in which the end of the axis of revolution is flushed with the circular excising lower end, while it's fixed to the drill in case the axis of revolution ends inside the tubular body, and therefore the drill will run through the circular lower end plane of the tubular body.

This configuration allows the excision of the gingiva, the removal of the tissues and the bone drilling in a single step.

The drill is provided with an end topped by a central sharp end which determines an excision tip that facilitates the performance of the drilling.

Also in one embodiment of the invention in which the drill is not included, we foresee that the diametral plate could be provided with two radial angular sections to assist the removal of the excised gingival tissues.

In either case, the radial sections may be vertical or tilted forming an angle between them to facilitate the introduction of the excised gingival tissues towards the top of the tubular body by the centrifugal force.

To provide a better understanding, this descriptive report is supported by a series of figures in which the invention is represented with an illustrative and non-restrictive character.

### BREAF STATMENT OF THE FIGURES

**Figure 1** shows a raised view of a possible embodiment of the scalpel of the invention applied on a split to excise the gingiva.
**Figure 2** shows another example of embodiment of the invention wherein the scalpel is provided with a bone drill bit to perform the excision of the gingiva, the removal of the excised gingival tissues and the bone drilling in a single step.

### DESCRIPTION OF THE PREFERRED EMBODIMENT

Based on the figures mentioned above a description of the invention is made below.

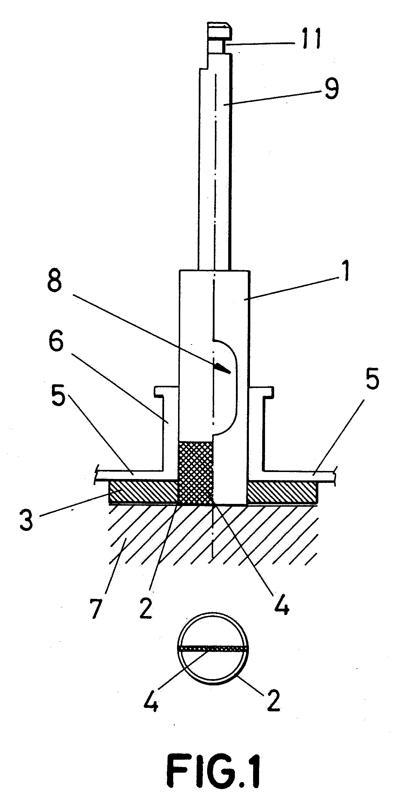

Figure 1 shows a first example of embodiment of the invention in which the device is provided with a scalpel that comprises a tubular body **1** with a circular gingiva-excising **3** lower end **2** for which, as described in the background section of the invention, it's provided with a guiding hole **6** on a splint **5** previously placed on the jaw or superior maxilla of the patient to guide the drillings to be performed where the implants must be placed.

The main novelty of the invention lies in the fact that the tubular body **1** is provided on its circular lower end **2** of a gingiva-excising **3** diametral plate **4,** so that when the scalpel rotates, the excision of the gingiva **3** and the insertion of the gingival tissues toward the top of the tubular body **1** are done simultaneously, SO BOTH CAN BE DONE IN A SINGLE STEP, MAKING THE PROCESS OF DENTAL IMPLANTS EASIER.

To perform the excision, the tubular body **1** is inserted in a guiding hole **6** through which the excision of the gingiva **3** is guided in the right place.

The tubular body **1** is provided with an opening **8** which allows the posterior removal of the excised gingival tissues that accumulate inside the tubular body **1.**

With this shape, the bone drilling **7** must be done straightaway by a drill through the guiding hole **6.**

To make the excision of the gingiva **3** and the removal of the gingival tissues easier, it's expected that both the circular excising lower end **2** and the excising **3** diametral plate **4** are provided with a lower edge formed by a blade or a sharp jag that facilitates this step.

The tubular body **1** is attached to the axis of revolution **9** which it's upper end **11** is intended for it's fixation to a drill (not shown), favoring both the excision of the gingiva and the removal of the gingival tissues, by the angular displacement of the diamentral plate **4** which applies a centrifugal force to the excised gingival tissues throwing them towards the top of the tubular body **1.**

In the embodiment of figure 1, the diametral plate **4** is formed by a vertical blade but it's also possible that it may be formed by two tilted radial sections forming an angle therebetween that makes easier the removal of the excised gingival tissues by the discussed action of the centrifugal force.

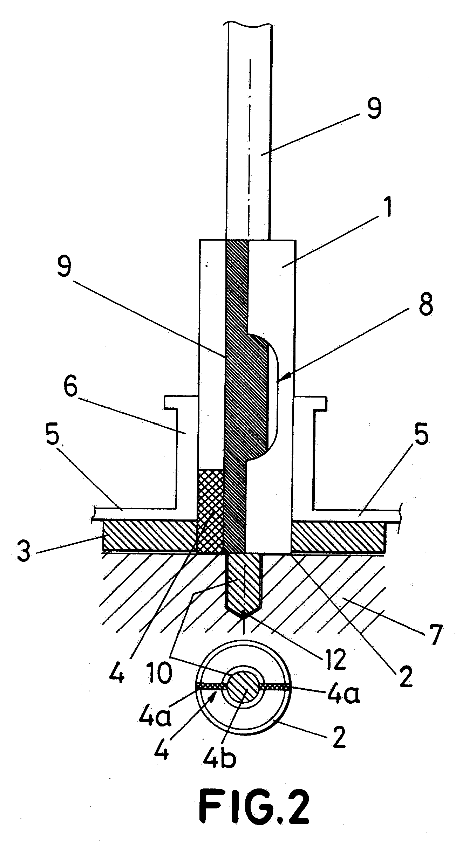

Figure 2 shows another possible embodiment in which the axis of revolution **9** reaches the circular lower end **2** of the tubular body **1,** to bear a bone **7** drill dip **10.** This configuration requires the establishment of a shape of the diametral plate **4** that comprises two excising radial end sections **4a** that join by a excising central cylindrical section **4b** that is fixed to the axis of revolution **9,** so that this configuration allows the excision of the gingiva **3,** the removal of gingival tissues and the bone drilling **7** in a single step. This procedure is favored by the fact that the circular lower end **2** together with the lower end of the axis of revolution **9** which are flushed togehter, both form a limit part during the making of the hole in the bone **7** by the drill bit **10,** which determines the bone drilling with a high accuracy depth that allows the placement of the implant at the required height to fix the teeth.

In this example of embodiment, it is also possible that the radial end sections **4a** are vertical or can be formed by tilted slides that form an angle therebetween to facilitate the removal of the excised gingival tissues.

It should be noted that both the radial end sections **4a** and the central cylindrical section **4b** are provided with a lower adge formed by a blade or a sharp jag.

It is possible that the cylindrical central section **4b** is fixed to the drill bit **10,** for that in this case the axis of revolution **9** ends inside the tubular body **1,** which means that is not flushed with the circular lower end **2,** in which case the drill locates in the plane formed by the circular lower end **2,** so that the central cylindrical section **4b** is fixed to the drill bit **10.**

## Claims

1. DEVICE FOR THE PERFORMANCE OF DENTAL IMPLANTS which comprises a scalpel provided with a gingiva-excising (3) circular lower end (2); defined by a scalpel with a tubular body (1) which it's gingiva-excising (3) circular lower end (2) includes a gingiva-excising diametral plate (4, 4a, 4b) which provokes the excision of the gingiva (3) and the insertion of the excised gingival tissues towards the top of the tubular body (1) with the scalpel's rotation.

2. DEVICE FOR THE PERFORMANCE OF DENTAL IMPLANTS, acccording to claim 1, **characterized in that** it is defined by a tubular body (1) that comprises at least one opening (8) for he removal of the excised gingival tissues.

3. DEVICE FOR THE PERFORMANCE OF DENTAL IMPLANTS, according to claim 1, **characterized in that** it is defined by a cylindrical tubular body (1).

4. DEVICE FOR THE PERFORMANCE OF DENTAL IMPLANTS, according to claim 1, **characterized in that** both the circular excising lower end (2) and the gingiva-excising (3) diametral plate (4, 4a, 4b), are provided with a lower edge selected between a blade and a sharp jag.

5. DEVICE FOR THE PERFORMANCE OF DENTAL IMPLANTS, according to claim 1, **characterized in that** it is defined by a tubular body (1) attached to an axis of revolution (9) fixed to a drill.

6. DEVICE FOR THE PERFORMANCE OF DENTAL IMPLANTS, according to claim 5, **characterized in that** it is defined by an axis of revolution (9) that is aligned with the tubular body's (1) axial axis, which it's upper end (11) is fixed to the drill and which it's lower end has a bone (7) drill bit (10) that protrudes from the tubular body's (1) circular lower end (2) a distance equal to the depth of the bone drilling (7); being the excising diametral plate (4) formed by two radial excising ends (4a) joined by a central excising circular section (4b) that is fixed to a part selected between the axis of revolution (9) and the drill bit (10).

7. DEVICE FOR THE PERFORMANCE OF DENTAL IMPLANTS, according to claim 6, **characterized in that** it is defined by a diametral plate (4, 4a, 4b) selected between a vertical plate and a plate determined by at least two tilted radial sections forming an angle between those radial sections.

8. DEVICE FOR THE PERFORMANCE OF DENTAL IMPLANTS, according to claim 7, **characterized in that** it is defined by a drill bit that is provided with a central sharp end (12).
